# EUROPEAN PATENT APPLICATION

(11) **EP 2 790 056 A2**
(43) Date of publication of application: **15.10.2014**
(21) Application number: 14163152.3
(22) Date of filing: 02.04.2014
(51) Int. Cl.: G02F 1/1335

(54) **Display device comprising backlight with clustered light sources**

(30) Priority: 09.04.2013 JP 2013081557; 20.06.2013 JP 2013129766
(71) Applicant: Funai Electric Co., Ltd., Daito city Osaka 574-0013 (JP)
(72) Inventor: Nitanai, Naoki, Osaka, Osaka 574-0013 (JP)
(74) Representative: Osha Liang SARL

(57) **Abstract**

A display device (10) comprises a light source placement surface, a display panel (13) provided opposite the light source placement surface (16S) and comprising a pair of first sides, a first light source cluster configured to pass through a predetermined central area (CA) of the light source placement surface (16S) and comprising a plurality of light sources disposed on the light source placement surface (16S) along a direction of the first sides, and a second light source cluster comprising at least one light source mounted to a corner portion (161, 162, 163, 164, 13A, 13B, 13C, 13D) of the light source placement surface (16S) and comprising a plurality of light sources disposed on the light source placement surface (16S) in a direction heading from the corner portion (161, 162, 163, 164, 13A, 13B, 13C, 13D) to the central area.

## Description

### [Technical Field]

The present invention relates to a display device such as a liquid crystal display device.

### [Background of Related Art]

Conventionally, a liquid crystal display device is widely used as a display device of a television or the like (for example, Patent Reference 1).

In this type of liquid crystal display device, a reflective sheet is provided on a back surface of a liquid crystal panel. A plurality of LEDs (light-emitting diodes) is disposed on a bottom surface of the reflective sheet. Each LED is disposed on the bottom surface of the reflective sheet so as to oppose a front surface of the liquid crystal panel. Each LED functions as a backlight of the liquid crystal panel.

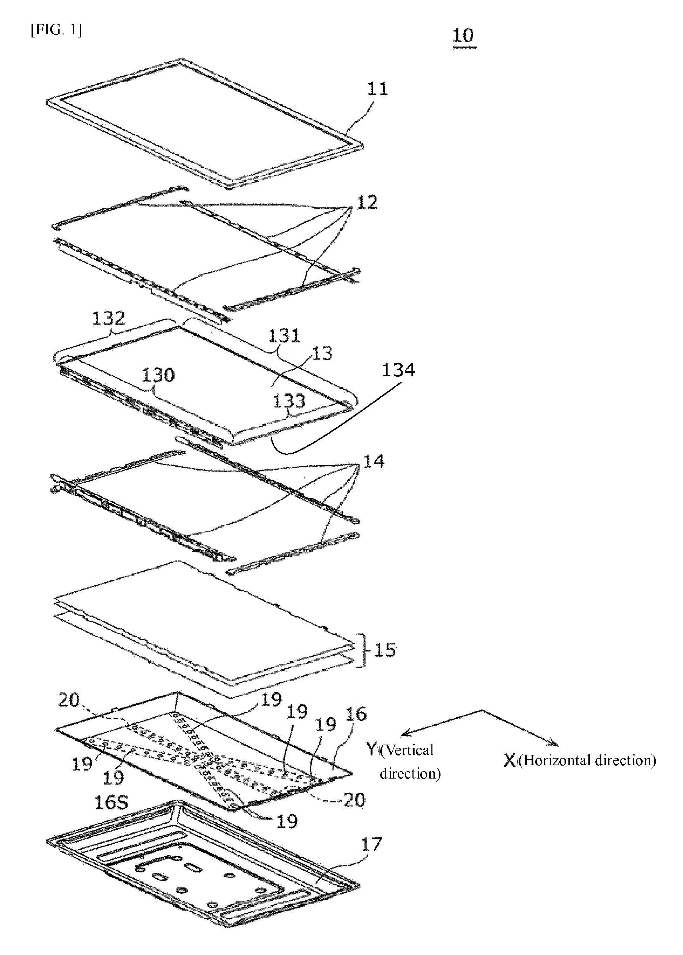

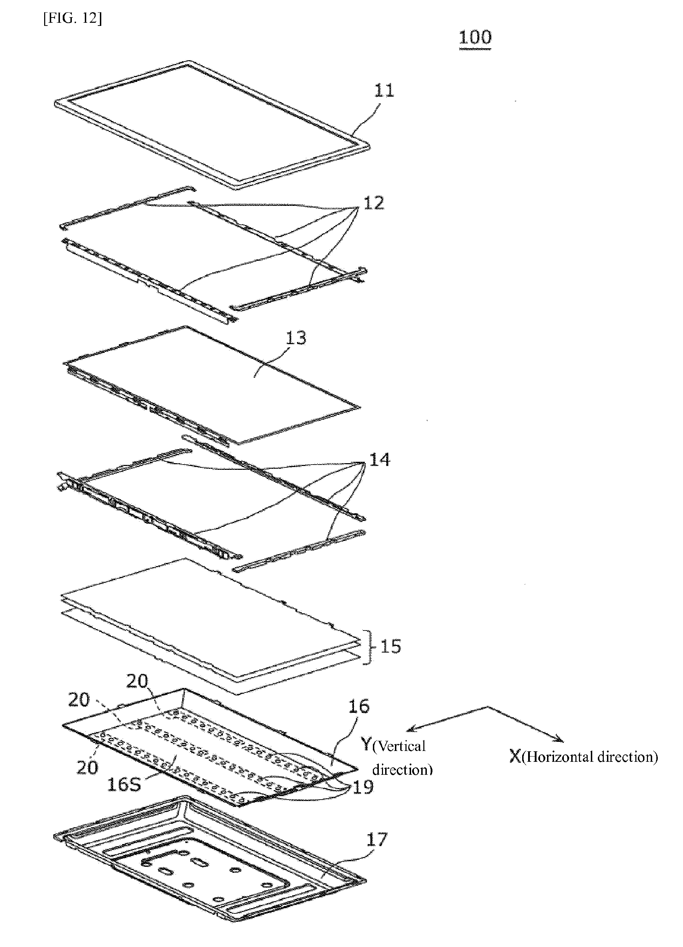

FIG. 12 is an exploded perspective view illustrating an exploded state of a conventional liquid crystal display device. In FIG. 12, "x-axis direction" represents a horizontal direction of a liquid crystal panel 13 and "y-axis direction" represents a vertical direction of the liquid crystal panel 13. Descriptions will be omitted in FIG. 12 because it may be the same as the liquid crystal display device 10 illustrated in FIG. 1 with the exceptions for a reflective sheet 16 and components associated with the reflective sheet 16.

As illustrated in FIG. 12, an LED substrate (light source substrate) 20 of three columns and two rows is disposed on a rear surface of the reflective sheet 16.

A plurality of LEDs 19 is mounted on a top surface of the plurality of LED substrates 20. Each LED 19 passes through a through hole formed on a bottom surface 16S of the reflective sheet 16 so an emission direction thereof is in a direction of the liquid crystal panel 13. A through hole will be described in the examples section below.

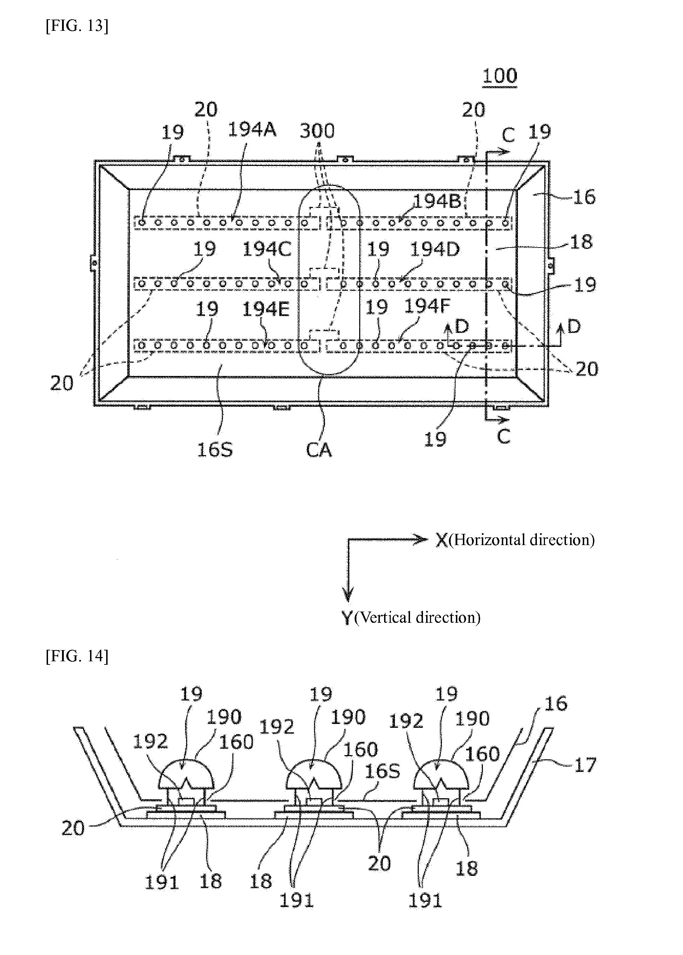

FIG. 13 is a surface view of the reflective sheet in the conventional liquid crystal display device. The reflective sheet 16 is mounted on the liquid crystal panel 13 as illustrated in FIG. 12 so that four outer sides of the reflective sheet 16 substantially overlap with sides of the liquid crystal panel 13, respectively.

Because of this, a horizontal direction of the reflective sheet 16 and a horizontal direction of the liquid crystal panel 13 are the same direction, and a vertical direction of the reflective sheet 16 and a vertical direction of the liquid crystal panel 13 are the same direction. Therefore, the horizontal direction of the reflective sheet 16 is represented by the arrow X which also represents the horizontal direction of the liquid crystal panel 13, and the vertical direction of the reflective sheet 16 is represented by the arrow Y which also represents the vertical direction of the liquid crystal panel 13.

As illustrated in FIG. 13, LED clusters 194A, 194C, and 194E configured from the plurality of LEDs 19 are disposed, respectively, toward a left end of the bottom surface 16S from a central area CA of the bottom surface 16S on the bottom surface 16S of the reflective sheet 16. Moreover, the LED clusters 194A, 194C, and 194E are disposed along the vertical direction.

Meanwhile, LED clusters 194B, 194D, and 194F configured from the plurality of LEDs 19 are disposed toward right end of the bottom surface 16S from the central area CA of the bottom surface 16S. Moreover, the LED clusters 194B, 194D, and 194F are disposed along the vertical direction.

A wiring 300 that electrically connects two LED substrates adjacent to each other in the horizontal direction is applied behind the reflective sheet 16.

FIG. 14 is a side view of FIG. 13 viewed in a line C-C direction and is a diagram schematically illustrating a cross section of the reflective sheet 16, a heat radiating plate 18, the LED 19, and the LED substrate 20. A rear frame 17 is not visible when viewing FIG. 13 in the line C-C direction, but the rear frame 17 is illustrated to describe the heat radiating plate 18.

As illustrated in FIG. 14, a through hole 160 for passing the LED 19 is formed on the bottom surface 16S of the reflective sheet 16. The LED 19 passes through the through hole 160 so a lens 190 thereof faces upward (i.e., the direction of the liquid crystal panel 13).

Furthermore, a leg part 191 of the LED 19 is connected to the LED substrate 20. An emission element 192 of the LED 19 emits light when the leg part 191 is energized through the LED substrate 20. Light obtained by the emission element 192 is diffused by the lens 190 and goes upward (i.e., the direction of the liquid crystal panel 13).

The LED substrate 20 is mounted on a heat radiating plate 18 by heat radiating tape or screws. The heat radiating plate 18 is mounted on the rear frame 17. Heat generated in the LED substrate 20 is thereby released to the rear frame 17 through the heat radiating plate 18.

[Patent Reference 1] Japanese Unexamined Patent Application Publication No. 2009-193669

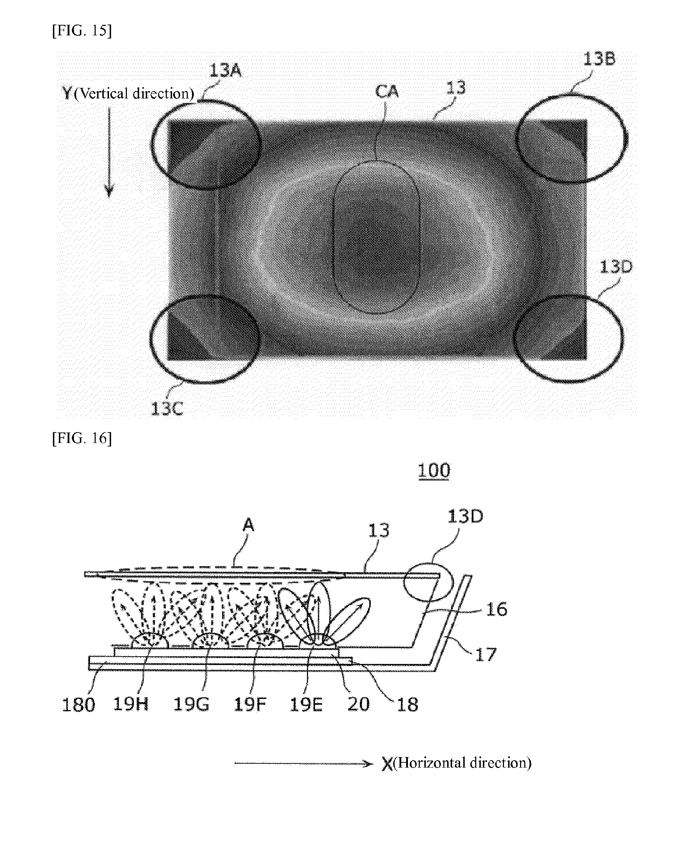

FIG. 15 is a surface view of the liquid crystal panel 13 in the conventional liquid crystal display device. In FIG. 15, a black area represents a dark area in an image and a white area represents a light area in the image. Four sides of the liquid crystal panel 13 (see FIG. 12) and a perimeter of the reflective sheet 16 (see FIG. 12) substantially aligns when the liquid crystal display device is assembled.

"Central area CA" represents a central area of the liquid crystal panel 13 as well as the central area CA of the reflective sheet 16 described above.

As illustrated in FIG. 15, during actual emission from each LED on the back surface of the liquid crystal panel 13, brightness is ensured in locations other than corner portions 13A to 13D, which include the central area CA of the liquid crystal panel 13, but brightness of the corner portions 13A to 13D tends to be less than that of other locations.

A possible reason causing the brightness of the corner portions 13A to 13D of the liquid crystal panel 13 to be less than other locations is described below.

FIG. 16 is a side view of FIG. 14 viewed from a line D-D direction. The liquid crystal panel 13 is not visible when viewing FIG. 14 from the line D-D direction, but the liquid crystal panel 13 is illustrated to describe one possible reason why the brightness of the corner portions 13A to 13D tends to become low. Moreover, another possible reason why the brightness of the corner portion 13D tends to become low is also described below. However, illustrations and explanations are omitted for other corner portions 13A to 13C since the reason for their dimness is the same as that of the corner portion 13D.

As illustrated in FIG. 16, LEDs 19E to 19H are disposed on the bottom surface 16S of the reflective sheet 16 along the horizontal direction of the liquid crystal panel 13.

An area A of the liquid crystal panel 13 is positioned in an emission direction of the LEDs 19F to 19H but not of the LED 19E, which is closest to the corner portion 13D of the liquid crystal panel 13. Moreover, light beams from two LEDs from LEDs 19F to 19H interfere with each other as illustrated, increasing an emission level to reach the area A of the liquid crystal panel 13. Therefore, sufficient brightness is ensured for the area A of the liquid crystal panel 13 onto which the LEDs 19F to 19H irradiate light beams.

Meanwhile, the LED 19E closest to the corner portion 13D is distant from the corner portion 13D of the liquid crystal panel 13. Moreover, there is no interference of light beams such as described above because there is no adjoining LED in a corner portion 13D direction. Therefore, a light beam from the LED 19E is less likely to reach the corner portion 13D of the liquid crystal panel 13.

As described above, in each LED cluster, a light beam from the LED nearest to the corner portions 13A to 13D of the liquid crystal panel 13 is less likely to reach the corner portions 13A to 13D, and a light beam from the LEDs 19F to 19H corresponding to the area A is more likely to reach the liquid crystal panel 13. As illustrated in FIG. 15, the brightness of the central area CA of the liquid crystal panel 13 is thereby ensured, but the brightness of the corner portions 13A to 13D is less likely to be as bright as the other locations.

As a result, an appearance of an image displayed on the liquid crystal panel 13 worsens, thus it becomes desirable to bring the brightness of the corner portions 13A to 13D to the brightness of the other locations.

### [Summary of the Invention]

One or more embodiments of the present invention provide a display device that can increase brightness of a display panel corner (portion) to match brightness of other locations without reducing brightness of a central area of the display panel.

In one or more embodiments, a display device may comprise: a light source placement surface, a display panel disposed opposite the light source placement surface and comprising a pair of first sides, a first light source cluster configured to pass through a predetermined central area of the light source placement surface and comprising a plurality of light sources disposed on the light source placement surface along a direction of the first sides, and a second light source cluster comprising at least one light source mounted to a corner portion of the light source placement surface and comprising a plurality of light sources disposed on the light source placement surface in a direction heading from the corner portion to the central area.

According to this configuration, for example, on the light source placement surface disposed opposite the display panel, the first light source cluster is configured to pass through the predetermined central area of the light source placement surface is mounted along the direction of the first sides of the display panel. Meanwhile, the second light source cluster comprises the light source mounted to the corner portions of the light source placement surface and is mounted in the direction heading to the central area of the light source placement surface.

By this, for example, light sources that illuminate the corner portions of the liquid crystal panel increase, and a number of light sources that illuminate the central area of the liquid crystal panel become substantially the same as is found conventionally. Therefore, a brightness of the corner portions of the display panel can be increased to match the brightness of other location without reducing brightness of the central area of the display panel.

Furthermore, in one or more embodiments, the display device may further comprise: a first light source substrate mounted with the plurality of light sources disposed behind the light source placement surface; and a second light source substrate comprising the corner portion or a vicinity of the corner portion of the light source mounting surface and disposed behind the light source mounting surface, wherein the plurality of light sources is configured to pass through a through hole formed on the light source placement surface so that a light emission direction faces the display panel, one of the light sources of the second light source cluster is mounted on a corner portion corresponding location that corresponds to the corner portion, and one of the light sources of the second light source cluster is mounted on the second light source substrate in a direction heading from the corner portion corresponding location to the central area of the light source placement surface.

In one or more embodiments of this configuration, because the second light source cluster is disposed on the particular substrate behind the light source placement surface, a user may freely set a mounting pattern of the light sources on the particular substrate. As a result, the user may easily set an angle of the second light source cluster relative to the first light source cluster. Therefore, the brightness of the central area of the display panel and the brightness of the corner portions of the display panel may easily be adjusted.

Furthermore in one or more embodiments, in the second light source cluster, a gap between adjacent light sources may become smaller as the gap reaches from the central area to the corner portion.

In one or more embodiments of this configuration, the brightness of the corner portions of the display panel may further be increased because in the second light source, the gap between two adjacent light sources becomes smaller heading from the central area to the corner portion.

Furthermore, a drive power greater than a drive power supplied to the first light source cluster may be supplied to the second light source cluster.

In one or more embodiments of this configuration, the brightness of the corner portions may be increased because greater drive power is supplied to the second light source cluster compared to the drive power supplied to the first light source cluster.

According to one or more embodiments of the present invention, the display device may further comprise: a light source placement surface; a display panel provided opposite the light source placement surface and comprises a pair of first sides; a plurality of light source clusters each comprising a plurality of light sources disposed on the light source placement surface and each disposed on the light source placement surface along a vertical direction of a second side of the display panel that intersects the first sides, wherein the plurality of light source clusters passes through a predetermined central area of the light source placement surface and along a horizontal direction of the first sides; and a corner portion light source disposed on the light source placement surface.

In one or more embodiments of the present invention, the plurality of light sources may be configured by mounting along the direction of the second side of the display panel, configured to intersect the first sides, and the plurality of light source clusters mounted through a predetermined central area of the light source placement surface along the direction of the first sides. Moreover, the corner portion light source is disposed in the light source placement surface.

By this, for example, the light sources configured to illuminate the corner portions of the liquid crystal panel are disposed anew, and the number of light sources configured to illuminate the central area of the liquid crystal panel becomes substantially the same as is found conventionally. Therefore, the brightness of the corner portions of the display panel may be increased to match the brightness of other location without reducing the brightness of the central area of the display panel.

Furthermore, in one or more embodiments, drive power supplied to the second light source cluster may be great than driver power supplied to the first light source cluster.

In one or more embodiments of this configuration, the brightness of the corner portions of the display panel may be increased because the drive power supplied to the corner portion light source is greater than the drive power supplied to the plurality of light source clusters.

According to one or more embodiments of the present invention, the display device may comprise: a light source placement surface; a display panel provided opposite the light source placement surface and comprising a pair of first sides; a plurality of light source clusters each comprising a plurality of light sources disposed on the light source placement surface and each disposed on the light source placement surface along a direction of a second side of the display panel that intersects the first sides, wherein the plurality of light source clusters passes through a predetermined central area of the light source placement surface and along a horizontal direction of the first sides, wherein the plurality of light source clusters comprises uppermost light source clusters along the second side of the display panel and lowermost light source clusters along the second side of the display panel; and a level difference for positioning a proximal light source disposed nearer to a panel display side than a light source side, the proximal light source being a light source from either the uppermost light source clusters or the lowermost light source clusters nearer to a corner portion of the light source placement surface.

In one or more embodiments of this configuration, the plurality of light source clusters may be configured by mounting along the direction of the second side of the display panel, which intersects the first sides, the plurality of light source clusters mounted through the predetermined central area of the light source placement surface along the direction of the first sides of the display panel.

Moreover, according to one or more embodiments of the present invention, the level difference for positioning the uppermost light source clusters along the second side and lowermost light source clusters along the second side allows the corner portion of the light source placement surface to be closer to the display panel side than the other light sources.

By this, for example, the number of light sources that illuminate the central area of the liquid crystal panel becomes substantially the same as is found conventionally, and the light beam from a proximal light source becomes more likely to hit the corner portions of the display panel. Therefore, the brightness of the corner portions of the display panel may be increased to match the brightness of the other locations without reducing the brightness of the central area of the display panel.

According to one or more embodiments of the present invention, the display device may comprise: a light source placement surface; a display panel provided opposite the light source placement surface and comprises a pair of first sides; a plurality of light source clusters each comprising a plurality of light sources disposed on the light source placement surface and each mounted on the light source placement surface along a direction of a second side of the display panel that intersects the first sides, wherein the plurality of light source clusters passes through a predetermined central area of the light source placement surface and along a horizontal direction of the first sides, wherein the plurality of light source clusters comprises uppermost light source clusters along the second side of the display panel and lowermost light source clusters along the second side of the display panel, and an emission direction of the proximal light source mounted nearer to a panel display side faces a corner portion of the display panel.

According to one or more embodiments, for example, the plurality of light source clusters may be configured by mounting along the direction of the second side of the display panel, which intersects the first sides, the plurality of light source clusters mounted through the predetermined central area of the light source placement surface and along the direction of the first sides of the display panel.

In one or more embodiments, in the uppermost light source cluster along the second side and the lowermost light source cluster along the second side, the proximal light source, which is the light source that is most proximal to the corner portion of the light source placement surface, may be mounted so the emission direction of the proximal light source faces the corner portion of the display panel.

By this, for example, the number of light sources that illuminate the central area of the liquid crystal panel becomes substantially the same as is found conventionally and the light beam from the proximal light source becomes more likely to hit the corner portions of the display panel. Therefore, the brightness of the corner portions of the display panel may be increased to match that of the other locations without reducing the brightness of the central area of the display panel.

For example, in one or more embodiments, the display device may further comprise: a plurality of light source substrates mounted with the plurality of light sources is disposed along the second side and behind the light source placement surface; the plurality of light sources passes through a through hole formed on the light source placement surface; a display panel may has an upper side and a lower side as the pair of first sides, wherein the plurality of light source clusters comprises uppermost light source clusters and lowermost light source clusters are mounted on the light source substrate and an emission direction is facing the display panel, the upper light source substrate mounted to the uppermost light source cluster is tilted so a top surface of the upper light source substrate faces a direction toward the top side of the display panel, and a lower light source substrate mounted to the lowermost light source cluster is tilted so a top surface of the light source substrate faces a direction toward the bottom side of the display panel.

According to one or more embodiments of the present invention, the uppermost light source cluster closest to the top side of the display panel may be mounted on an upper light source substrate. Meanwhile, the lowermost light source cluster closest to the bottom side of the display panel may be mounted on a lower light source substrate. Moreover, the top surface of the upper light source substrate may face the direction toward the top side of the display panel, and the top surface of the lower light source substrate may face the direction toward the bottom side of the display panel.

The brightness of the corner portions of the display panel may thereby increase.

Alternatively, in one or more embodiments, each of the plurality of light sources may comprise an emission element and a lens that diffuses light emitted from the emission element, wherein the lens may be tiltable relative to the emission element, and the lens of the proximal light source may be tilted relative to the emission element to light from the proximal light source heads to the corner portion.

According to one or more embodiments of the present invention, light may be emitted toward the corner portions of the liquid crystal panel merely by tilting the lens. Therefore, for example, the brightness of the corner portions of the display panel may easily be made brighter.

Furthermore, in one or more embodiments, the light source may be a light-emitting diode (LED).

According to one or more embodiments of the present invention, because the light source may be a conventional LED, a reduction in costs may be achieved. Moreover, an installation space may be small as well.

Furthermore, in one or more embodiments, the display panel may be a liquid crystal panel.

According to one or more embodiments of the present invention, because the display panel may be the liquid crystal panel, the liquid crystal display device exhibiting the effects described above may be achieved.

According to one or more embodiments of the present invention, the brightness of the corner portions of the display panel may be increased to match the brightness of the other location without reducing the brightness of the central area of the display panel.

### [Brief Description of Drawings]

FIG. 1 is an exploded perspective view illustrating an exploded state of a liquid crystal display device relating to one or more embodiments of a first example of the present invention.
FIG. 2 is a side view schematically illustrating a relation between a light-emitting diode (LED), a reflective sheet, an LED substrate (light source substrate), a heat radiating plate, and a rear frame according to one or more embodiments of the present invention.
FIG. 3 is a surface view illustrating an example of a top surface of a reflective sheet of the liquid crystal display device relating to one or more embodiments of the first example of the present invention.
FIG. 4 is a surface view of a liquid crystal panel for describing effects of a liquid crystal display device 1 relating to one or more embodiments of the first example of the present invention.
FIG. 5 is a diagram representing results of measuring brightness on a diagonal line L (see FIG. 4) of a liquid crystal panel according to one or more embodiments of the present invention.
FIG. 6 is a surface view illustrating an example of a reflective sheet of a liquid crystal display device relating to one or more embodiments of a second example of the present invention.
FIG. 7 is a surface view illustrating an example of a reflective sheet of a liquid crystal display device relating to one or more embodiments of a third example of the present invention.
FIG. 8 is a surface view illustrating an example of a reflective sheet of a liquid crystal display device relating to one or more embodiments of a fourth example of the present invention.
FIG. 9 is a diagram including a side view of line A-A in FIG. 8 for describing advantages compared to a conventional liquid crystal display device 100 according to one or more embodiments of the present invention.
FIG. 10 is a surface view illustrating an example of a reflective sheet of a liquid crystal display device relating to one or more embodiments of a fifth example of the present invention.
FIG. 11A is a cross-sectional view of line B-B in FIG. 11 according to one or more embodiments of the present invention.
FIG. 11B is a cross-sectional view of line B-B in FIG. 11 according to one or more embodiments of the present invention.
FIG. 12 is an exploded perspective view illustrating an exploded state of a conventional liquid crystal display device.
FIG. 13 is a plane view of a reflective sheet of the conventional liquid crystal display device.
FIG. 14 is a cross-sectional view of line C-C in FIG. 13.
FIG. 15 is a surface view of a liquid crystal panel for describing a conventional liquid crystal display device.
FIG. 16 is a cross-sectional view of line D-D in FIG. 14.

### [Detailed Description of Embodiments]

Embodiments of the present invention will be described in detail below using drawings. Each embodiment described below illustrates a comprehensive or specific example of the present invention. Components, disposed positions and connection modes of the components, and the like illustrated in the embodiments below are mere examples and not intended to limit the present invention in any way. Moreover, among the components in the embodiments below, components not described in the independent claims, which provide the highest level of description, will be described as optional components.

Furthermore, a liquid crystal display device is illustrated as a display device example, but the present invention is not limited to this example, and various embodiments of the present invention can bring a brightness of a corner portion of a display panel to match the brightness of a central area.

### (First Example)

### (Configuration of Liquid Crystal Display Device)

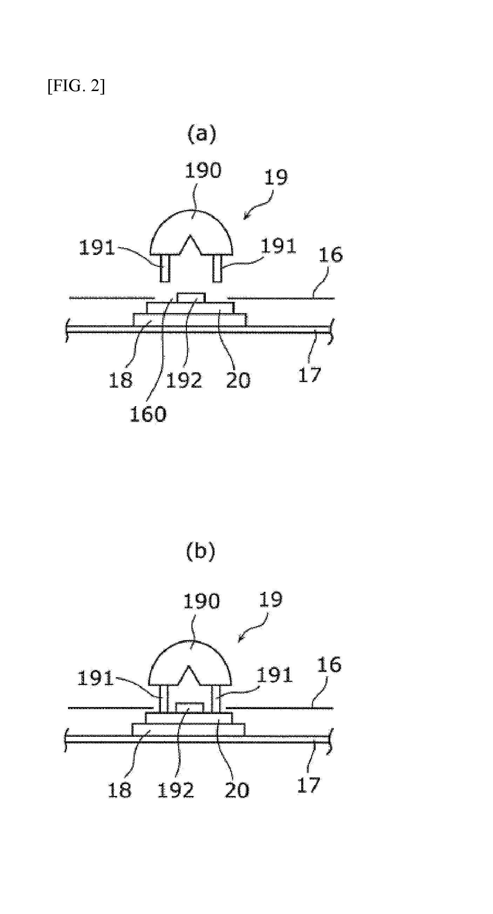

FIG. 1 is an exploded perspective view illustrating an exploded state of a liquid crystal display device relating to one or more embodiments of a first example of the present invention. FIG. 2 is a side view schematically illustrating a relation between a light-emitting diode (LED) 19, a reflective sheet 16, an LED substrate (light source substrate) 20, a heat radiating plate 18, and a rear frame 17. In FIG. 1, "x-axis direction" represents a horizontal direction of a liquid crystal panel (display panel) 13 and "y-axis direction" represents a vertical direction of the liquid crystal panel 13. Moreover, (a) in FIG. 2 represents a state where a lens 190 is removed, and (b) in FIG. 2 represents a state where the lens 190 is mounted.

A liquid crystal display device 10 is provided with a front cabinet 11, a bezel 12, a liquid crystal panel 13, a mold frame 14, an optical sheet 15, a reflective sheet 16, and a rear frame 17.

The front cabinet 11 is a frame-shaped member disposed on a front side of the liquid crystal display device 10. The bezel 12 is a member provided along an outer frame of the liquid crystal panel 13 to protect the outer frame.

The liquid crystal panel 13 is a member that displays images and has a pair of first sides 130, 131 in a horizontal direction and a pair of second sides 132, 133 in a vertical direction. The mold frame 14 is a member that supports the liquid crystal panel 13 from a back surface thereof.

The optical sheet 15 is configured from a plurality of members such as a diffusion plate and a light guide plate. The reflective sheet 16 is a member that reflects light from the LED 19 disposed on a bottom surface (light source placement surface) 16S thereof toward the optical sheet 15. The rear frame 17 is a member that configures a rear portion enclosure of the liquid crystal display device 10.

The LED substrate (light source substrate) 20 is disposed on a rear surface of the reflective sheet 16.

A plurality of LEDs 19 is mounted on a top portion of a plurality of LED substrates 20. Each LED 19 passes through a through hole 160 so an emission direction thereof is in a direction of the liquid crystal panel 13. Each LED 19 functions as a backlight of the liquid crystal panel 13.

As illustrated in FIG. 2, the LED 19 is provided with the lens 190, a pair of leg parts 191 mounted to the lens 190, and an emission element 192 disposed on the LED substrate 20. The lens 190 diffuses light emitted from the emission element 192. The pair of leg parts 191 is a member mounted to the LED substrate 20 for covering the emission element 192 with the lens 190. The emission element 192 is a member that emits light by being energized.

The through hole 160 is formed on a portion of the reflective sheet 16 where the LED 19 is desired to be passed through. The lens 190 and the pair of leg parts 191 pass through the reflective sheet 16 at this through hole 160 when the pair of leg parts 191 is mounted on the LED substrate 20.

The LED substrate 20 and the heat radiating plate 18 are disposed on the rear surface of the reflective sheet 16, and these are mounted by heat radiating tape or screws. The heat radiating plate 18 is mounted on the rear frame 17. The heat radiating plate 18 releases heat generated by the LED substrate 20 to the rear frame 17.

In the LED 19, the lens 190 is configured so that a direction the lens 190 faces can be adjusted by adjusting a length of one of the pair of leg parts 191.

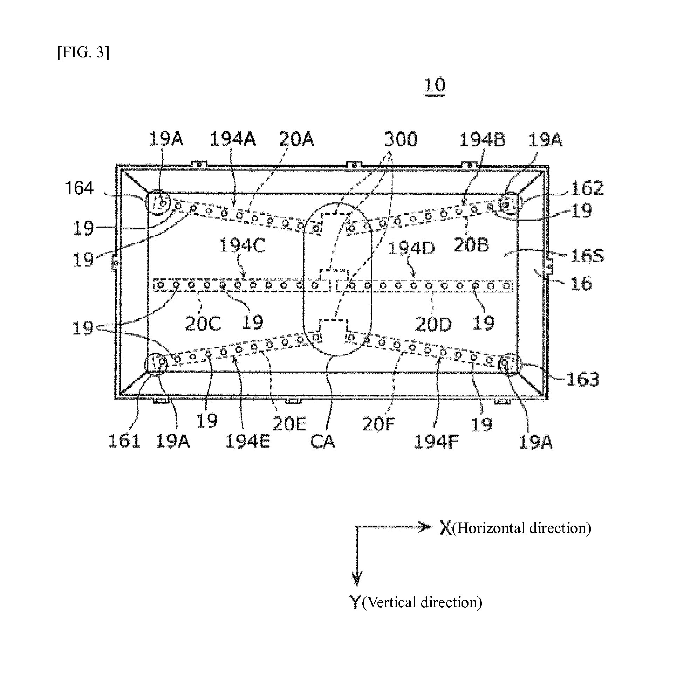

FIG. 3 is a surface view illustrating an example of a top surface of the reflective sheet 16 of the liquid crystal display device 10 relating to one or more embodiments of the first example of the present invention. The reflective sheet 16 is mounted on the liquid crystal panel 13 as illustrated in FIG. 1 so that a perimeter of the reflective sheet 16 substantially overlaps with sides of the liquid crystal panel 13, respectively.

Because of this, a horizontal direction of the reflective sheet 16 and the horizontal direction of the liquid crystal panel 13 are the same direction, and a vertical direction of the reflective sheet 16 and the vertical direction of the liquid crystal panel 13 are the same direction. To illustrate this, the horizontal direction of the reflective sheet 16 is represented by the arrow X that represents the horizontal direction of the liquid crystal panel 13, and the vertical direction of the reflective sheet 16 is represented by the arrow Y that represents the vertical direction of the liquid crystal panel 13. A plurality of LED clusters 194A to 194F is configured by disposing the plurality of LEDs 19 in a predetermined direction on the bottom surface 16S of the reflective sheet 16.

An LED substrate 20A that faces a central area CA from a corner portion 164 of the reflective sheet 16 is disposed on the rear surface of the reflective sheet 16. A plurality of through holes 160 for passing the LED 19 though is formed on the reflective sheet 16 on the LED substrate 20A. The LED 19 passes through each through hole 160 so the emission direction thereof is in the direction of the liquid crystal panel 13. The LED cluster (second light source cluster) 194A is thereby configured.

Furthermore, an LED substrate 20B that faces the central area CA from a corner portion 162 of the reflective sheet 16 is disposed on the rear surface of the reflective sheet 16. The plurality of through holes 160 for passing the LED 19 though is formed on the reflective sheet 16 on the LED substrate 20B. The LED 19 passes through each through hole 160 so the emission direction thereof is in the direction of the liquid crystal panel 13. The LED cluster (second light source cluster) 194B is thereby configured.

Furthermore, an LED substrate 20E that faces the central area CA from a corner portion 161 of the reflective sheet 16 is disposed on the rear surface of the reflective sheet 16. The plurality of through holes 160 for passing the LED 19 though is formed on the reflective sheet 16 on the LED substrate 20E. The LED 19 passes through each through hole 160 so the emission direction thereof is in the direction of the liquid crystal panel 13. The LED cluster (second light source cluster) 194E is thereby configured.

Furthermore, an LED substrate 20F that faces the central area CA from a corner portion 163 of the reflective sheet 16 is disposed on the rear surface of the reflective sheet 16. The plurality of through holes 160 for passing the LED 19 though is formed on the reflective sheet 16 on the LED substrate 20F. The LED 19 passes through each through hole 160 so the emission direction thereof is in the direction of the liquid crystal panel 13. The LED cluster (second light source cluster) 194F is thereby configured.

Furthermore, LED substrates 20C, 20D that pass through the central area CA of the reflective sheet 16 and face the horizontal direction are disposed on the rear surface of the reflective sheet 16. The plurality of through holes 160 for passing the LED 19 though is formed on the reflective sheet 16 on the LED substrates 20C, 20D. The LED 19 passes through each through hole 160 so the emission direction thereof is in the direction of the liquid crystal panel 13. The LED clusters (first light source cluster) 194C, 194D are thereby configured.

### (Effects of the Liquid Crystal Display Device)

The present inventor performed experiments described below using the liquid crystal display device 1 illustrated in FIGS. 1 to 3 and the conventional liquid crystal display device 100 illustrate in FIGS. 12 to 14.

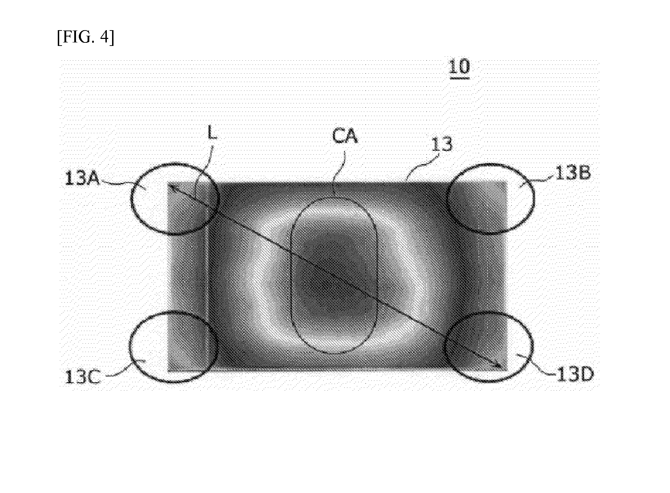

FIG. 4 is a surface view of the liquid crystal panel 13 for describing effects of the liquid crystal display device 1 relating to one or more embodiments of the first example of the present invention. When the present inventor lighted the LED 19 on the reflective sheet 16 by mounting the liquid crystal panel 13 on the reflective sheet 16, the image illustrated in FIG. 4 was displayed on the liquid crystal panel 13. In FIG. 4, a black portion represents a dark portion in the image and a white portion represents a light portion in the image.

When FIG. 4 and FIG. 15 were compared, corner portions 13A to 13D were brighter in FIG. 4 than in FIG. 15. Meanwhile, brightness of the central area CA did not change substantially between the two.

Furthermore, in one or more embodiments of the present invention, measured brightness on a diagonal line L (see FIG. 4) on the liquid crystal panel 13 in the liquid crystal display device 1 relating to one or more embodiments of the first example and in the conventional liquid crystal display device 100, respectively.

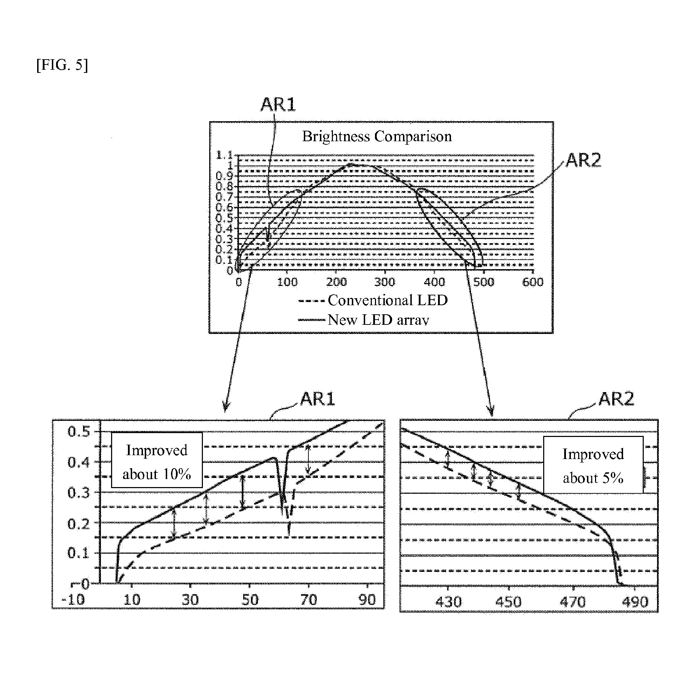

FIG. 5 is a diagram representing results of measuring the brightness on the diagonal line L (see FIG. 4) of the liquid crystal panel 13. In FIG. 5, the horizontal axis and the vertical axis respectively represent size (unit is mm) and "rate of change" of brightness when brightness in the center of the liquid crystal panel 13 is defined as "100%." Moreover, an area AR1 and an area AR2 respectively represent brightness at a starting end portion and an ending end portion of the diagonal line L, i.e., the corner portions 13A and 13D.

As illustrated in FIG. 5, in the area AR1, brightness indicated by the solid line is about 10% stronger than brightness indicated by the dashed line, and in the area AR2, brightness indicated by the solid line is stronger by about 5% or more than brightness indicated by the dashed line.

In the area AR1, the rate of change dips once as the size increases from 50 mm to 70 mm. This is because a holding member (not illustrated) that holds the optical sheet 15 exists on the reflective sheet 16 from a portion corresponding to the corner portion 13A, along the diagonal line L, and within a range of 50 mm to 70 mm. Because such holding member exists, brightness drops in an area more or less directly above the holding member in the liquid crystal panel 13.

As described above, according to the liquid crystal display device relating to one or more embodiments of the first example, the LED clusters 194C and 194D are mounted so as to pass through the central area CA of an LED mounting surface 18S along the horizontal direction of the liquid crystal panel 13. Moreover, the LED clusters 194A, 194B, 194E, and 194F are disposed toward the central area CA from the corner portions 180 to 183 of the LED mounting surface 18S.

Brightness of the corner portions 13A to 13D of the liquid crystal panel 13 may thereby be increased to match the brightness of other locations without lowering the brightness of the central area CA of the liquid crystal panel 13.

In the LED clusters 194A, 194B, 194E, and 194F, the LED 19 may be disposed so that a gap between two adjacent LEDs 19 becomes smaller as the gap reaches the corner portions 180 to 183 from the central area CA. The brightness of the corner portions 13A to 13D of the liquid crystal panel 13 may thereby be further increased.

Furthermore, a drive power supplied to the LED clusters 194A, 194B, 194E, and 194F may be made greater than the LED clusters 194C and 194D. Doing so enables the brightness of the corner portions 13A to 13D to be further increased.

### (Second Example)

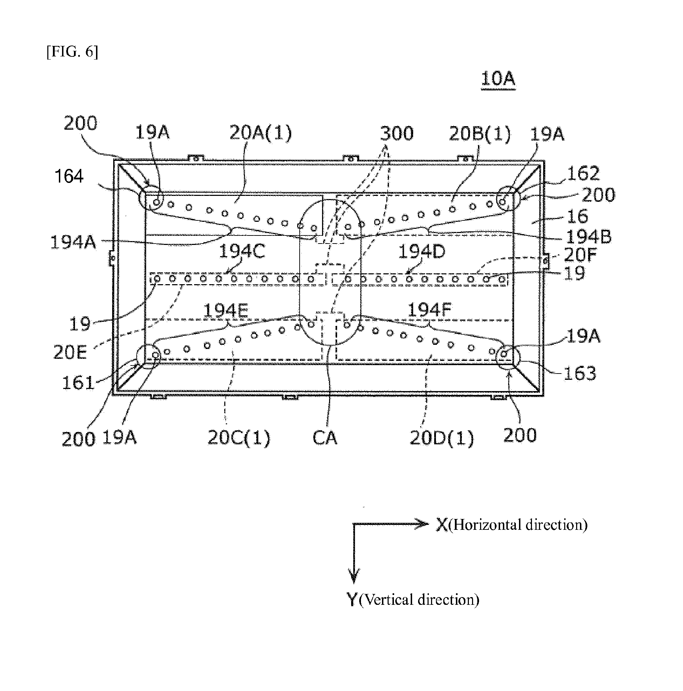

FIG. 6 is a surface view illustrating an example of a reflective sheet of a liquid crystal display device relating to one or more embodiments of a second example of the present invention. A basic configuration of the liquid crystal display device relating to the second example may be the same as that of the liquid crystal display device 10 relating to the first example, except for elements attached to the reflective sheet 16. Therefore, the same reference numerals will be used for configuring elements of a liquid crystal display device 10A that may be the same as those used in the liquid crystal display device 10, and descriptions thereof will be omitted.

In the liquid crystal display device 10A, in addition to LED substrates 20A, 20B, 20C, and 20D, LED substrates 20A(1), 20B(1), 20C(1), and 20D(1), which may have greater surface areas than the aforementioned substrates, are disposed on a rear surface of a reflective sheet 16.

These LED substrates 20A(1) to 20D(1) each may have a surface area comprising corner portions 161, 162, 163, and 164 of the reflective sheet 16. In FIG. 6, the surface areas comprising the LED substrates 20A(1) to 20D(1), but the present invention is not limited to this example, and the surface areas may comprising a vicinity of the corner portions 161 to 164.

In LED substrates 20(1) to 20(4), a portion corresponding to the corner portions 161 to 164 of a bottom surface 16S of the reflective sheet 16 will hereafter be referred to as a corner portion corresponding location 200.

At least one corner portion LED 19A is mounted on the corner portion corresponding location 200 of each LED substrate 20A(1) to 20D(1). Moreover, a plurality of LEDs 19 is mounted from the corner portion corresponding location 200 of each LED substrate 20A(1) to 20D(1) toward a central area CA.

In the liquid crystal display device 10A, the plurality of LEDs 19 on the LED substrate 20A(1), including the corner portion LED 19A, configures an LED cluster 194A as described above.

Furthermore, the plurality of LEDs 19 on the LED substrate 20B(1), including the corner portion LED 19A, configures an LED cluster 194B as described above.

Furthermore, the plurality of LEDs 19 on the LED substrate 20C(1), including the corner portion LED 19A, configures an LED cluster 194E as described above.

Furthermore, the plurality of LEDs 19 on the LED substrate 20D(1), including the corner portion LED 19A, configures an LED cluster 194F as described above.

As described above, according to the display device 10A relating to the second embodiment, because the plurality of LEDs 19 in each LED substrate 20A to 20D is disposed from the corner portion corresponding location 200 toward the central area CA, the same effects as the display device 10 relating to the first example may be obtained.

Furthermore, a worker may dispose each LED 19 on the LED substrates 20A(1) to 20D(1) so each LED cluster maintains an arbitrary angle. Because an angle relative to a horizontal direction of each LED cluster may thereby be set to a desired angle, the worker may easily adjust brightness of the central area CA of the liquid crystal panel 13 and brightness of corner portions 13A to 13D of the liquid crystal panel.

In the LED clusters 194A, 194B, 194E, and 194F, the LED 19 may be disposed so that a gap between two LEDs 19 becomes smaller when heading toward corner portions 180 to 183 from the central area CA. The brightness of the corner portions 13A to 13D of the liquid crystal panel 13 may thereby be further increased.

Furthermore, a drive power supplied to the LED clusters 194A, 194B, 194E, and 194F may be made greater than the LED clusters 194D and 194D. Doing so enables the brightness of the corner portions 13A to 13D to be further increased.

In particular, a drive power greater than that given to the LED 19, except of that in the corner portion corresponding location 200, may be supplied to the corner portion LED 19A. The brightness of the corner portions 13A to 13D of the liquid crystal panel 13 may thereby be further increased.

Furthermore, in the LED clusters 194A, 194B, 194E, and 194F, the LED 19 may be disposed so that a gap between two LEDs 19 becomes smaller when heading toward the corner portions 180 to 183 from the central area CA. The brightness of the corner portions 13A to 13D of the liquid crystal panel 13 may thereby be further increased.

### (Third Example)

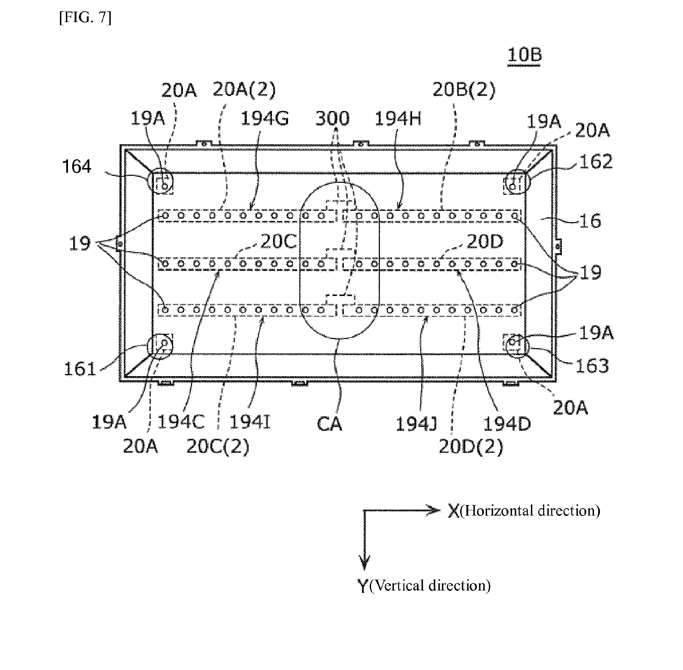

FIG. 7 is a surface view illustrating an example of a reflective sheet of a liquid crystal display device relating to one or more embodiments of a third example of the present invention. A basic configuration of the liquid crystal display device relating to the third example may be the same as that of the liquid crystal display device 10 relating to the first example, except for elements attached to the reflective sheet 16. Therefore, the same reference numerals will be used for configuring elements of a liquid crystal display device 10B that are the same as those used in the liquid crystal display device 10, and descriptions thereof will be omitted.

Each LED cluster 194G, 194C, and 194I is configured by a plurality of LEDs 19 being mounted along a horizontal direction of a liquid crystal panel 13, toward a left direction from a central area CA of an LED mounting surface 18S. The LED clusters 194G, 194C, and 194I are disposed along a vertical direction of the liquid crystal panel 13.

Furthermore, each LED cluster 194H, 194D, and 194J is configured by the plurality of LEDs 19 being mounted along the horizontal direction of the liquid crystal panel 13, toward a right direction from the central area CA of the LED mounting surface 18S. The LED clusters 194H, 194D, and 194J are disposed along the vertical direction of the liquid crystal panel 13.

Furthermore, a corner portion LED 19A described above is mounted independently from the LED clusters on corner portions 161 to 164 of a bottom surface 16S of a reflective sheet 16. Mounting of the corner portion LED 19A is possible by forming a through hole 160 in each corner portion 161 to 164 of the bottom surface 16S and passing the corner portion LED 19A disposed on an LED substrate 20A through the through hole 160. A heat radiating plate 18 is disposed directly below the LED substrate 20A and a rear frame 17 is disposed directly below the heat radiating plate 18.

As described above, according to the liquid crystal display device 10B relating to the third example, because corner portion LEDs 19A to 19D are disposed independently from the LED clusters passing through the central area CA, brightness of the corner portions may be improved without decreasing brightness of the central area CA.

Furthermore, because a gap between each LED cluster and an LED cluster adjacent thereto in a vertical direction is the same as a conventional gap illustrated in FIG. 15 and irradiates the coer portion in a pinpoint, unevenness in brightness of the liquid crystal panel 13 is less likely to occur compared to the first and second examples.

In the LED clusters 194G, 194H, 194I, and 194J, the LED 19 may be disposed so that a gap between two LEDs 19 becomes smaller when heading toward the corner portions 161 to 164 from the central area CA. The brightness of corner portions 13A to 13D of the liquid crystal panel 13 may thereby be further increased.

### (Fourth Example)

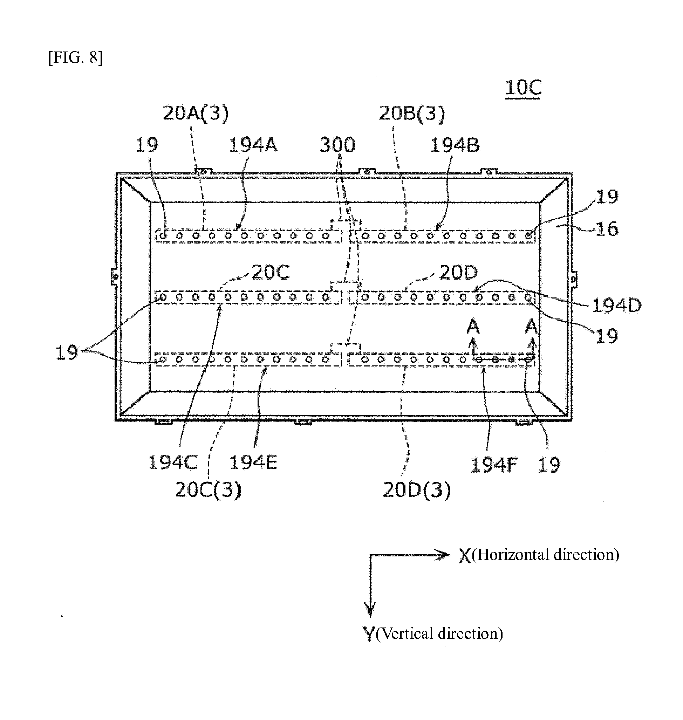

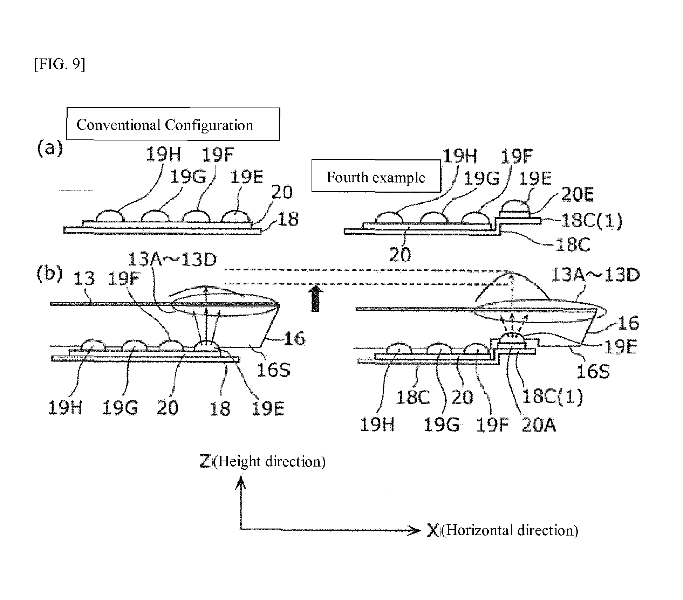

FIG. 8 is a surface view illustrating an example of a reflective sheet of a liquid crystal display device relating to one or more embodiments of a fourth example of the present invention. FIG. 9 is a diagram including a side view of line A-A in FIG. 8 for describing advantages compared to the conventional liquid crystal display device 100.

FIG. 9(a) represents a state where a liquid crystal panel 13 is not mounted, and FIG. 9(b) represents a state where the liquid crystal panel 13 is mounted. Moreover, in (a) and (b) in FIG. 9, a height direction is represented by a z-axis direction. In FIG. 9, a process is applied, such as, hollowing out the bottom surface 16S in only a portion where a level difference 18C(1) is located because the level difference 18C(1) raises a bottom surface 16S of a reflective sheet 16 if a treatment is not applied to the bottom surface 16S.

In this liquid crystal display device 10C, as in the conventional liquid crystal display device 100 (see FIG. 13), LED clusters (light source clusters) 194A to 194F are disposed on the bottom surface 16S of the reflective sheet 16.

However, the level difference 18C(1) in an upward direction is provided on a heat radiating plate 18 on which LED substrates 20A(3), 20C(3) are disposed so each apex of an LED 19 on a left end portion of the LED cluster 194A and an LED 19 on a left end portion of the LED cluster 194E is closer to the liquid crystal panel 13 than apexes of other LEDs 19.

Furthermore, a level difference 18C in the upward direction is formed on the heat radiating plate 18 on which LED substrates 20B(3), 20D(3) are disposed so each apex of an LED 19 on a right end portion of the LED cluster 194B and an LED 19 on a right end portion of the LED cluster 194F is closer to the liquid crystal panel 13 than apexes of the other LEDs 19.

In FIG. 9, a configuration of a right portion of the LED cluster 194F is illustrated, and the level difference 18C(1) raises an LED 19E on a right end higher than other LEDs 19F to 19H. In contrast, in a conventional configuration, a height of the apex of the LED 19E is the same as that of the other LEDs 19E to 19H.

In FIG. 9, the right portion of the LED cluster 194F is illustrated, but because a configuration of a left portion of the LED cluster 194A, a right portion of the LED cluster 194B, and a left portion of the LED cluster 194E is the same as that of a right end of the LED cluster 194F, illustrations and descriptions will be omitted for the left portion of the LED cluster 194A, the right portion of the LED cluster 194B, and the left portion of the LED cluster 194E.

As illustrated in FIG. 9(b), in the conventional configuration, a light beam in corner portions 13A to 13D is weak, but according to the fourth example, the light beam in the corner portions 13A to 13D becomes stronger compared to the conventional configuration (see parabolas in (b) in FIG. 9).

As described above, according to the liquid crystal display device 10C relating to the fourth example, the LED clusters 194A to 194F are disposed in the same manner as in the conventional liquid crystal display device 100 (see FIG. 13). Moreover, the level difference 18C(1) as described above raises the apex of the LED 19E higher than the other LEDs 19.

Brightness of the corner portions 13A to 13D of the liquid crystal panel 13 can thereby be brought closer to brightness of other locations without lowering the brightness of a central area CA of the liquid crystal panel 13.

### (Fifth Example)

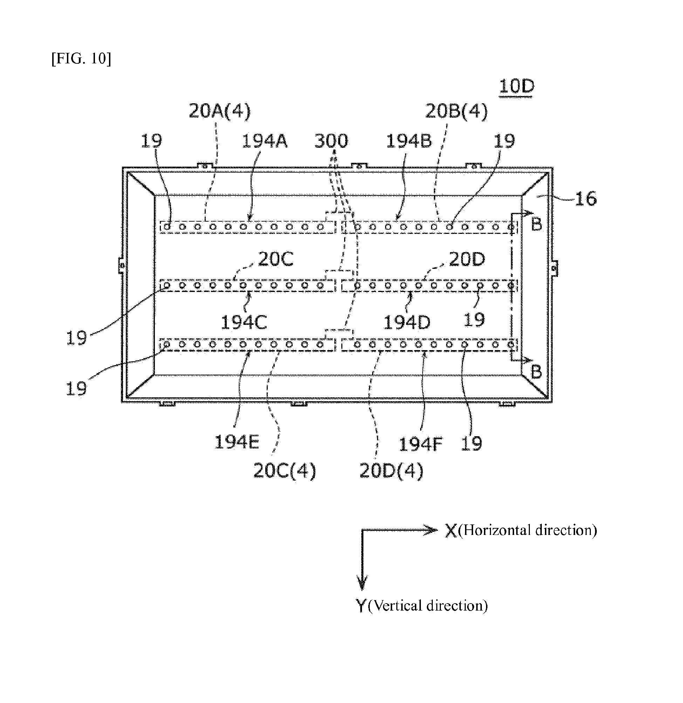

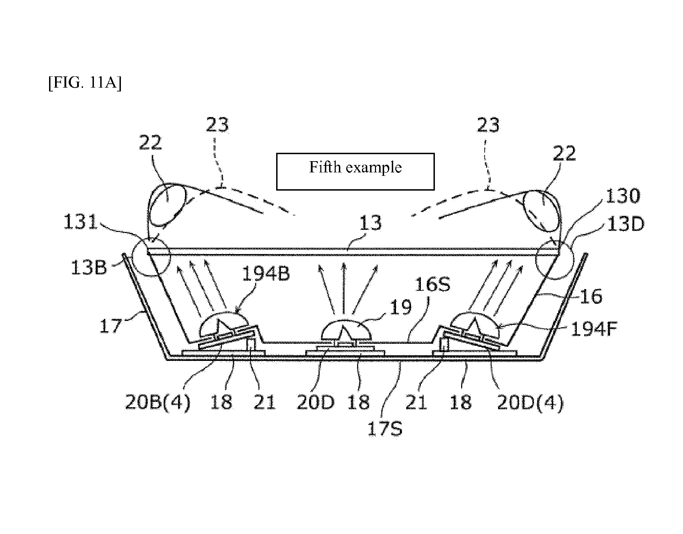

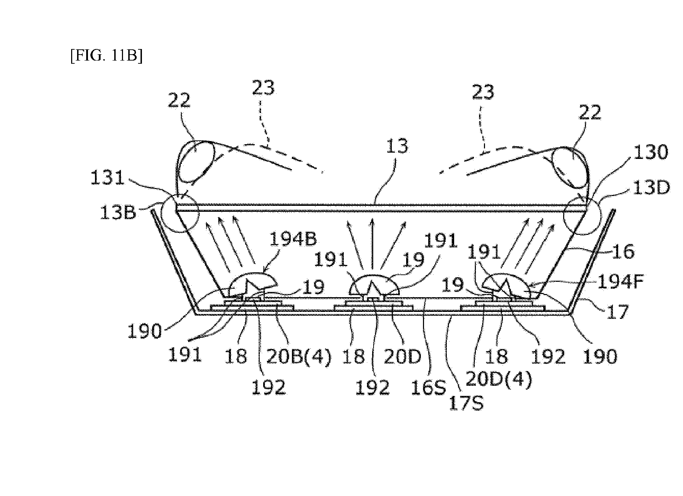

FIG. 10 is a surface view illustrating an example of a reflective sheet of a liquid display device relating to one or more embodiments of a fifth example of the present invention. FIGS. 11A and 11B are cross-sectional views of line B-B in FIG. 10.

In FIG. 11A, a bottom surface 16S of a reflective sheet 16 deforms by an amount LED substrates 20B(4), 20D(4) are tilted, but deformation is permissible if it does not affect brightness desired in a liquid crystal panel 13.

Furthermore, in FIG. 11B, a reference numeral "22" present directly above the liquid crystal panel 13 represents a light beam from LED clusters 194B and 194F, and a reference numeral "23" represents a size of the light beam 22.

In this liquid crystal display device 10D, LED clusters 194A to 194F are disposed on the bottom surface 16S of the reflective sheet 16 in the same manner as in the conventional liquid crystal display device 100

The LED substrate (upper light source substrate) 20B(4) mounted with the LED cluster 194B is set at a predetermined angle relative to a bottom surface 17S of a rear frame 17 by a protrusion 21 perpendicular relative to a heat radiating plate 18. Moreover, the LED substrate (lower light source substrate) 20D(4) mounted with the LED cluster 194F is also set at a predetermined angle relative to the bottom surface 17S of the rear frame 17 by the protrusion 21 perpendicular relative to the heat radiating plate 18.

The predetermined angle is an angle of a top surface of the LED substrate 20B(4) facing a direction toward a top side 131 from among a pair of first sides 130, 131 of the liquid crystal panel 13 and an angle the LED substrate 20D(4) facing a direction toward a bottom side 134 of the liquid crystal panel 13. More specifically, the predetermined angle is an angle comprising a corner portion 13B in an emission direction of the LED cluster 194B and a corner portion 13D in an emission direction of the LED cluster 194F. The LED clusters 194A, 194E also have LED substrates 20A(4), 20C(4) mounted with the LED clusters 194A, 194E tilted so a light beam from the LED clusters 194A, 194E faces corner portions 13A, 13C, in the same manner as in the LED clusters 194B, 194F.

As described above, according to the liquid crystal display device 10D relating to the fifth example, tilting the LED substrates 20A(4), 20B(4), 20C(4), and 20D(4) so the light beam heads toward the corner portions 13A to 13D enables brightness of the corner portions 13A to 13D of the liquid crystal panel 13 to be increased to match other locations in an easy method.

In the fifth example, instead of tilting an LED substrate 20, a lens 190 may be tilted relative to an emission element 192 so the corner portion 13B is included in a direction facing an apex of the lens 190 of each LED 19 of the LED cluster 194B, as illustrated in FIG. 11B, and this by adjusting a length of a leg part 191 of the LED 19.

Furthermore, the lens 190 may be tilted relative to the emission element 192 so the corner portion 13D is included in the direction facing the apex of the lens 190 of each LED 19 of the LED cluster 194F.

Descriptions and illustrations of the LED clusters 194A and 194E will be omitted because they are configured in a similar manner to the LED clusters 194B and 194F.

In an aspect such as described above, setting brightness of the liquid crystal panel 13 can be performed more precisely because a direction in which the light beam heads can be adjusted for each LED 19 by tilting the lens 190 relative to the emission element 192.

Furthermore, in this aspect, it is also possible to only tilt the lens 190 of the LED 19 closest to the corner portions 13A to 13D because a tilt of the lens 190 can be adjusted for each LED 19. Therefore, the brightness of the corner portions 13A to 13D of the liquid crystal panel 13 can be brought nearer to the other locations more easily than when tilting the LED substrate 20 as described above.

In contrast, in FIG. 14, the light beam is less likely to reach the corner portions 13B, 13D because neither the LED substrate 20 nor the lens 190 is tilted.

### (Other Examples and the Like)

The liquid crystal display device relating to one or more embodiments of the present invention is described above, but the present invention is not limited to these examples.

For example, the fourth example may be implemented in combination with one of the first to third examples, and the LED 19 closest to the corner portions 13A to 13D may be positioned so the apex is positioned above the other LEDs 19 by providing the level difference 18C(1).

Furthermore, the fifth example may be implemented in combination with one of the first to fourth examples. That is, the LED substrate provided with the LED clusters 194A, 194B, 194E, and 194F may be tilted to the light beams from each LED cluster reaches the corner portions 13A to 13D. Moreover, the lens 190 may be tiled for each LED 19 in the LED clusters 194A, 194B, 194E, and 194F.

Furthermore, a secondary lens 190 of the LED 19 closest to the corner portions 13A to 13D may be tilted so the light beam from the LED 19 reaches the corner portions 13A to 13D.

One or more embodiments of the present invention is applicable to a device that seeks to bring brightness of a corner portion of a display panel nearer to brightness of a central area, such as, for example, a liquid crystal display device.

### [Explanation of Reference Numerals]

10, 10A to 10D Liquid crystal display device
13 Liquid crystal panel
13A to 13D Corner portions of the liquid crystal panel
16 Reflective sheet
16S Surface of the reflective sheet
18 Heat radiating plate
18C(1) Level difference
19, 19A to 19H LED
20A to 20F, 20A(1) to 20D(1), 20A(2) to 20D(2), 20A(3) to 20D(3), 20A(4) to 20D(4) LED substrate
200 Corner portion corresponding location
190 Lens
194A to 194J LED cluster
CA Central area

## Claims

1. A display device (10), comprising:
a light source placement surface (16S);
a display panel (13) disposed opposite the light source placement surface (16S) and comprising a pair of first sides (130, 131);
a first light source cluster (194c, 194D) configured to pass through a predetermined central area (CA) of the light source placement surface (16S) and comprising a plurality of light sources (19) disposed on the light source placement surface (16S) along a direction of the first sides (130,131); and
a second light source cluster comprising at least one light source mounted to a corner portion (161, 162, 163, 164, 13A, 13B, 13C, 13D) of the light source placement surface (16S) and comprising a plurality of light sources (19) disposed on the light source placement surface (16S) in a direction heading from the corner portion (161, 162, 163, 164, 13A, 13B, 13C, 13D) to the central area (CA).

2. The display device (10) according to Claim 1, further comprising:
a first light source substrate (20) mounted with the plurality of light sources disposed behind the light source placement surface (16S); and
a second light source substrate (20)comprising the corner portion (161, 162, 163, 164, 13A, 13B, 13C, 13D) or a vicinity of the corner portion (161, 162, 163, 164, 13A, 13B, 13C, 13D) of the light source mounting surface and disposed behind the light source mounting surface, wherein
the plurality of light sources (19) configured to pass through a through hole (160) formed on the light source placement surface (16S) so that a light emission direction faces the display panel (13),
one of the light sources of the second light source cluster configured to be mounted on a corner portion corresponding location (200) to the corner portion (161, 162, 163, 164, 13A, 13B, 13C, 13D), and
one of the light sources of the second light source cluster (194A, 194B, 194E, 194F) is configured to be mounted on the second light source substrate (20) in a direction heading from the corner portion (161, 162, 163, 164, 13A, 13B, 13C, 13D) corresponding location to the central area (CA) of the light source placement surface (16S).

3. The display device (10) according to Claim 1 or 2, wherein:
in the second light source cluster (194A, 194B, 194E, 194F), a gap between adjacent light sources becomes smaller as the gap reaches from the central area (CA) to the corner portion (161, 162, 163, 164, 13A, 13B, 13C, 13D).

4. The display device (10) according to any one of Claims 1 to 3, wherein:
drive power supplied to the second light source cluster (194A, 194B, 194E, 194F) is configured to be great than driver power supplied to the first light source cluster (194c, 194D).

5. A display device (10), comprising:
a light source placement surface;
a display panel (13) disposed opposite the light source placement surface (16S) and comprising a pair of first sides (130, 131);
a plurality of light source clusters each comprising a plurality of light sources disposed on the light source placement surface (16S) and each disposed on the light source placement surface (16S) along a vertical direction of a second side of the display panel (13) configured to intersect the first sides (130, 131), wherein the plurality of light source clusters passes through a predetermined central area (CA) of the light source placement surface (16S) and along a horizontal direction of the first sides (130, 131); and
a corner portion light source disposed on the light source placement surface (16S).

6. The display device (10) according to Claim 5, wherein:
drive power supplied to the corner portion (161, 162, 163, 164, 13A, 13B, 13C, 13D) light source is configured to be greater than drive power supplied to the plurality of light source clusters.

7. A display device (10), comprising:
a light source placement surface (16S);
a display panel (13) disposed opposite the light source placement surface (16S) and comprising a pair of first sides (130, 131);
a plurality of light source clusters (194A, 194B, 194C, 194D, 194E, 194F, 194G, 194H, 194I, 194J) each comprising a plurality of light sources (19) disposed on the light source placement surface (16S) and each disposed on the light source placement surface (16S) along a direction of a second side (132, 133) of the display panel (13) configured to intersect the first sides (130, 131), wherein the plurality of light source clusters is configured to pass through a predetermined central area (CA) of the light source placement surface (16S) and along a horizontal direction of the first sides, wherein the plurality of light source clusters (194A, 194B, 194C, 194D, 194E, 194F, 194G, 194H, 194I, 194J) comprises uppermost light source clusters along the second side (132, 133) of the display panel (13) and lowermost light source clusters along the second side (132, 133) of the display panel (13); and
a level difference 18C(1) for positioning a proximal light source disposed nearer to a panel display side than a light source side, the proximal light source being a light source from either the uppermost light source clusters or the lowermost light source clusters nearer to a corner portion of the light source placement surface (18S).

8. A display device (10), comprising:
a light source placement surface (16S);
a display panel (13) disposed opposite the light source placement surface (16S) and comprising a pair of first sides (130, 131);
a plurality of light source clusters (194A, 194B, 194C, 194D, 194E, 194F, 194G, 194H, 194I, 194J) each comprising a plurality of light sources (19) disposed on the light source placement surface (16S) and each mounted on the light source placement surface (16S) along a direction of a second side (132, 133) of the display panel (13) is configured to intersect the first sides (130, 131), wherein the plurality of light source clusters (194A, 194B, 194C, 194D, 194E, 194F, 194G, 194H, 194I, 194J) passes through a predetermined central area (CA) of the light source placement surface (16S) and along a horizontal direction of the first sides (130, 131),
wherein the plurality of light source clusters (194A, 194B, 194C, 194D, 194E, 194F, 194G, 194H, 194I, 194J) comprises uppermost light source clusters along the second side (132, 133) of the display panel (13) and lowermost light source clusters along the second side (132, 133) of the display panel (13), and
an emission direction of the proximal light source mounted nearer to a panel display side faces a corner portion (161, 162, 163, 164, 13A, 13B, 13C, 13D) of the display panel (13).

9. The display device (10) according to Claim 8, wherein:
a plurality of light source substrates (20) mounted with the plurality of light sources (19) is disposed along the second side (132, 133) and behind the light source placement surface (16S);
the plurality of light sources (19) passes through a through hole (160) formed on the light source placement surface (16S);
a display panel (13) has an upper side and a lower side as the pair of first sides,
wherein the plurality of light source clusters (194A, 194B, 194C, 194D, 194E, 194F, 194G, 194H, 194I, 194J) comprises uppermost light source clusters and lowermost light source clusters are mounted on the light source substrate (20) and an emission direction is facing the display panel (13),
the upper light source substrate mounted to the uppermost light source cluster is configured to be tilt so a top surface of the upper light source substrate faces a direction toward the top side of the display panel (13), and
a lower light source substrate mounted to the lowermost light source cluster is configured to be tilt so a top surface of the light source substrate faces a direction toward the bottom side of the display panel (13).

10. The display device (10) according to Claim 8, wherein:
each of the plurality of light sources (19) comprises an emission element (192) and a lens (190) diffusing light emitted from the emission element (192),
wherein the lens (190) is tiltable relative to the emission element (192), and
the lens (190) of the proximal light source is tilted relative to the emission element (192) to light from the proximal light source heads to the corner portion (161, 162, 163, 164, 13A, 13B, 13C, 13D).

11. The display device (10) according to any of Claims 1 to 10, wherein:
the light source (19) is a light-emitting diode (LED).

12. The display device (10) according to any of Claims 1 to 11, wherein:
the display panel (13) is a liquid crystal panel.
